(19) Europäisches Patentamt / European Patent Office / Office européen des brevets

(11) **EP 2 104 220 B1**

(12) **EUROPÄISCHE PATENTSCHRIFT**

(45) Veröffentlichungstag und Bekanntmachung des Hinweises auf die Patenterteilung:
**04.11.2009 Patentblatt 2009/45**

(51) Int Cl.:
***H02M 7/48*** *(2007.01)*

(21) Anmeldenummer: 08152989.3

(22) Anmeldetag: **19.03.2008**

(54) **Verfahren zum Betrieb einer Umrichterschaltung sowie Vorrichtung zur Durchführung des Verfahrens**

Method for operating an inverter controller and device for carrying out the method

Procédé de fonctionnement d'un circuit convertisseur ainsi que dispositif destiné à l'exécution du procédé

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**23.09.2009 Patentblatt 2009/39**

(73) Patentinhaber: **ABB Schweiz AG**
**5400 Baden (CH)**

(72) Erfinder:
• **Ronner, Beat**
**CH-4464 Maisprach (CH)**
• **Gaupp, Osvin**
**CH-5400 Baden (CH)**

(74) Vertreter: **ABB Patent Attorneys**
**C/o ABB Schweiz AG**
**Intellectual Property (CH-LC/IP),**
**Brown Boveri Strasse 6**
**5400 Baden (CH)**

(56) Entgegenhaltungen:
**CN-A- 1 658 465     CN-A- 101 119 031**

**Beschreibung**

**Technisches Gebiet**

Die Erfindung bezieht sich auf das Gebiet der Leistungselektronik. Sie geht aus von einem Verfahren zum Betrieb einer Umrichterschaltung sowie einer Vorrichtung zur Durchführung des Verfahrens gemäss dem Oberbegriff der unabhängigen Ansprüche.

**Stand der Technik**

Herkömmliche Umrichterschaltungen umfassen eine Vielzahl an ansteuerbaren Leistungshalbleiterschaltern, welche in bekannter Weise zur Schaltung von mindestens zwei Schaltspannungsniveaus verschaltet sind. Typischerweise ist eine solche Umrichterschaltung mit einem elektrischen Wechselspannungsnetz verbunden, welches insbesondere dreiphasig ausgebildet ist. Solche Umrichterschaltungen werden häufig in Industrieanlagen eingesetzt, wobei die Umrichterschaltungen netzgekoppelt sind und wobei natürlich weitere Einsatzgebiete und Verwendungsmöglichkeiten denkbar sind.

Für den Betrieb der Umrichterschaltung ist eine Regelungsvorrichtung vorgesehen, welche eine Reglereinheit zur Bildung eines Regelsignals durch Ausregelung eines H-ten Oberschwingungsanteils von Netzströmen auf einen Netzstromsollwert aufweist und die über eine Ansteuerschaltung zur Bildung eines Ansteuersignals aus dem Regelsignal mit den ansteuerbaren Leistungshalbleiterschaltern verbunden ist, wobei der H-te Oberschwingungsanteil von der Umrichterschaltung hervorgerufen wird und allgemein H=1, 2, 3,...ist. Typische Werte für H sind H= 5, 7, 11, 13. Mittels des Ansteuersignals werden somit die Leistungshalbleiterschalter angesteuert.

Das vorstehend genannte Verfahren zum Betrieb der Umrichterschaltung erlaubt mittels der Regelungsvorrichtung eine Ausregelung eines H-ten Oberschwingungsanteils der Netzströme auf einen Netzstromsollwert. In einem elektrischen Wechselspannungsnetz können aber neben Oberschwingungsanteilen in den Netzströmen auch Oberschwingungsanteile in den Netzspannungen auftreten, die sich aber mittels des bekannte vorstehend beschriebene Verfahrens nicht ausregeln und damit nicht reduzieren lassen.

**Darstellung der Erfindung**

Aufgabe der Erfindung ist es deshalb, ein Verfahren zum Betrieb einer Umrichterschaltung anzugeben, mittels welchem ein Oberschwingungsanteil in Netzspannungen eines mit der Umrichterschaltung verbundenen elektrischen Wechselspannungsnetzes reduziert werden kann. Ferner ist es die Aufgabe der Erfindung, eine Vorrichtung anzugeben, mit der das Verfahren in besonders einfacher Weise durchgeführt werden kann.

Diese Aufgaben werden durch die Merkmale des Anspruchs 1 bzw. des Anspruchs 10 gelöst. In den abhängigen Ansprüchen sind vorteilhafte Weiterbildungen der Erfindung angegeben.

Die Umrichterschaltung weist eine Umrichtereinheit mit einer Vielzahl an ansteuerbaren Leistungshalbleiterschaltern auf und ist mit einem dreiphasigen elektrischen Wechselspannungsnetz verbunden. Beim erfindungsgemässen Verfahren zum Betrieb der Umrichterschaltung werden nun die ansteuerbaren Leistungshalbleiterschalter mittels eines aus einem Regelsignal gebildeten Ansteuersignals angesteuert und das Regelsignal wird durch Ausregelung eines H-ten Oberschwingungsanteils von Netzströmen auf einen Netzstromsollwert gebildet, wobei H=1, 2, 3, ..., ist. Erfindungsgemäss wird der Netzstromsollwert durch Ausregelung eines H-ten Oberschwingungsanteils von Netzspannungen auf einen vorgebbaren Netzspannungssollwert gebildet, wobei die Regeldifferenz aus dem H-ten Oberschwingungsanteil der Netzspannungen und dem Netzspannungssollwert durch eine bezüglich des H-ten Oberschwingungsanteils ermittelte Netzimpedanz gewichtet wird. Damit beeinflusst der entsprechende H-te Oberschwingungsanteil der Netzspannungen direkt die Bildung des Netzstromsollwertes, so dass der H-te Oberschwingungsanteil in den Netzspannungen in gewünschtem Masse vorteilhaft reduziert werden kann. Da sich die Netzimpedanz typischerweise im Laufe der Zeit ändert und dies schlussendlich einer Änderung der Regelstrecke entspricht, müsste der an der Ausregelung beteiligten Regler bezüglich seiner Reglerparameter an die geänderte Netzimpedanz jedes Mal nachgeführt bzw. neu eingestellt werden. Durch die Gewichtung der Regeldifferenz durch die Netzimpedanz wird eine solche Nachführung bzw. Neueinstellung der Reglerparameter des an der Ausregelung beteiligten Reglers und damit die Neuauslegung des Reglers mit Vorteil überflüssig, da die Netzimpedanz nun direkt auf den Eingang des Reglers und damit direkt auf die Ausregelung einwirkt.

Die erfindungsgemässe Vorrichtung zur Durchführung des Verfahrens zum Betrieb der Umrichterschaltung weist eine der Erzeugung des Regelsignals $S_R$ dienende Regelungsvorrichtung auf, die über eine Ansteuerschaltung zur Bildung des Ansteuersignals mit den ansteuerbaren Leistungshalbleiterschaltern verbunden ist, wobei die Regelungsvorrichtung eine erste Reglereinheit zur Bildung des Regelsignal durch Ausregelung des H-ten Oberschwingungsanteils der Netzströmen auf den Netzstromsollwert aufweist und H=1, 2, 3, ..., ist. Nach der Erfindung weist die Regelungsvorrichtung nun eine zweite Reglereinheit zur Bildung des Netzstromsollwertes durch Ausregelung des H-ten Oberschwingungsanteils der Netzspannungen auf den vorgebbaren Netzspannungssollwert auf, wobei die Regeldifferenz aus H-tem Oberschwingungsanteil der Netzspannungen und Netzspannungssollwert durch die bezüglich des H-ten Oberschwingungsanteils ermittelte Netzimpedanz gewichtet ist. Die erfindungsgemässe Vorrichtung zur Durchführung des Verfahrens zum Betrieb der Umrichterschaltung ist somit sehr einfach und kostengünstig realisierbar, da der Schaltungsaufwand äusserst gering gehalten werden kann und zudem nur eine geringe Anzahl an Bauelementen für den Aufbau benötigt wird. Mittels dieser Vorrichtung ist das erfindungsgemässe Verfahren somit besonders einfach durchführbar.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigen:

Fig. 1 eine Ausführungsform einer erfindungsgemässen Vorrichtung zur Durchführung des erfindungsgemässen Verfahrens zum Betrieb einer Umrichterschaltung,

Fig. 2 eine Ausführungsform einer erfindungsgemässen Regelungsvorrichtung und

Fig. 3 ein zeitlicher Verlauf des Betrages eines H-ten Oberschwingungsanteils von Netz- spannungen.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

**Wege zur Ausführung der Erfindung**

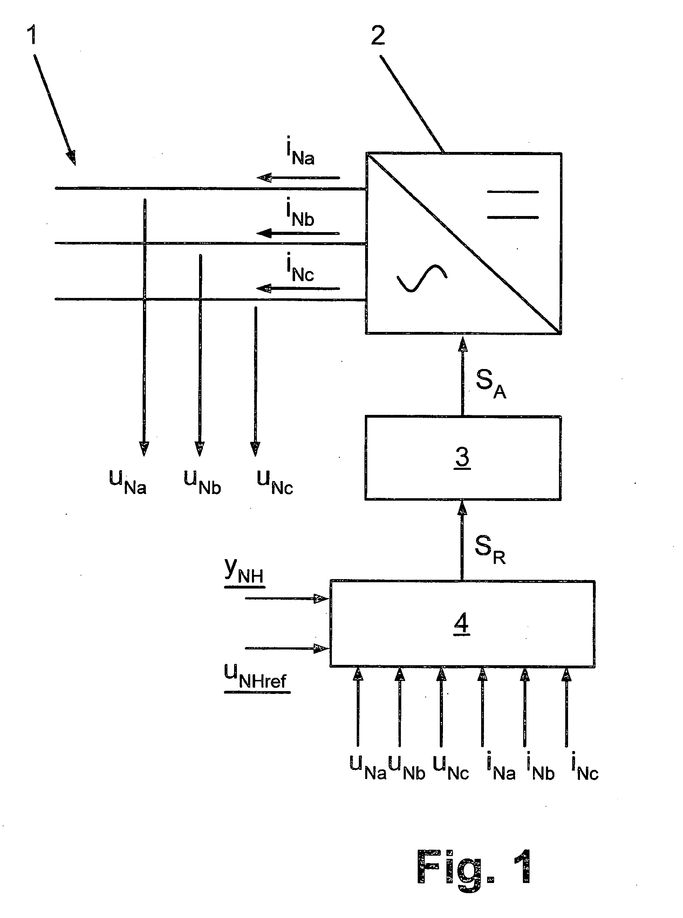

In Fig. 1 ist eine Ausführungsform einer erfindungsgemässen Vorrichtung zur Durchführung des erfindungsgemässen Verfahrens zum Betrieb einer Umrichterschaltung gezeigt. Die Umrichterschaltung weist gemäss Fig. 1 eine Umrichtereinheit 2 mit einer Vielzahl an ansteuerbaren Leistungshalbleiterschaltern auf und ist mit einem dreiphasigen elektrischen Wechselspannungsnetz verbunden. Es sei erwähnt, dass die Umrichtereinheit 1 allgemein als jedwede Umrichtereinheit 1 zur Schaltung von $\geq 2$ Schaltgleichspannungsniveaus (Multi-Level-Umrichterschaltung) ausgebildet sein kann. Beim erfindungsgemässen Verfahren zum Betrieb der Umrichterschaltung werden die ansteuerbaren Leistungshalbleiterschalter mittels eines aus einem Regelsignal $S_R$ gebildeten Ansteuersignals $S_A$ angesteuert und das Regelsignal $S_R$ durch Ausregelung eines H-ten Oberschwingungsanteils von Netzströmen $i_{NH}$ auf einen Netzstromsollwert $i_{HNref}$ gebildet, wobei H=1, 2, 3, ..., ist. Erfindungsgemäss wird der Netzstromsollwert $i_{NHref}$ durch Ausregelung eines H-ten Oberschwingungsanteils von Netzspannungen $u_{NH}$ auf einen vorgebbaren Netzspannungssollwert $u_{NHref}$ gebildet, wobei die Regeldifferenz $u_{NHdiff}$ aus dem H-ten Oberschwingungsanteil der Netzspannungen $u_{NH}$ und dem Netzspannungssollwert $u_{NHtef}$ durch eine bezüglich des H-ten Oberschwingungsanteils ermittelte Netzimpedanz $y_{NH}$ gewichtet wird. Somit beeinflusst der entsprechende H-te Oberschwingungsanteil der Netzspannungen $u_{NH}$ die Bildung des Netzstromsollwertes $i_{NHref}$ direkt, so dass der H-te Oberschwingungsanteil in den Netzspannungen in gewünschtem Masse vorteilhaft reduziert werden kann. Durch die Gewichtung der Regeldifferenz $u_{NHdiff}$ durch die Netzimpedanz $y_{NH}$ wird eine Nachführung bzw. Neueinstellung der Reglerparameter des an der Ausregelung beteiligten Reglers und damit die Neuauslegung des Reglers aufgrund einer sich typischerweise zeitlich ändernden Netzimpedanz $y_{NH}$ mit Vorteil überflüssig, da die Netzimpedanz $y_{NH}$ nun direkt auf den Eingang des Reglers und damit direkt auf die Ausregelung einwirkt.

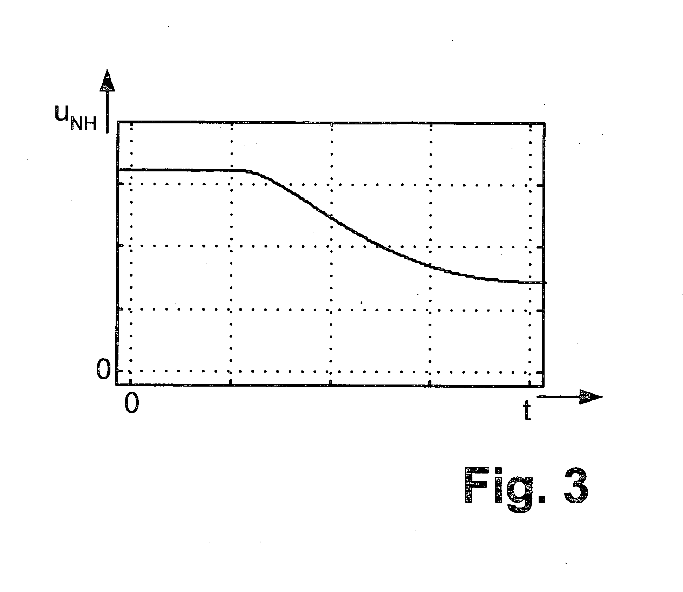

Ein zeitlicher Verlauf des Betrages eines H-ten Oberschwingungsanteils von Netzspannungen $u_{NH}$ ist in Fig. 3 dargestellt, wobei eine deutliche Reduzierung des H-ten Oberschwingungsanteils über der Zeit t erkennbar ist.

Da sich die Netzimpedanz $y_{NH}$ typischerweise im Laufe der Zeit ändern kann, wird bezüglich des H-ten Oberschwingungsanteils der Betrag der Netzspannungsänderung $|\Delta u_{NH}|$ vorzugsweise auf einen Schwellwert hin $u_{NHTol}$ überwacht. Bei jedem Überschreiten des Schwellwertes $u_{NHTol}$ wird dann die Netzimpedanz $y_{NH}$ neu ermittelt. Zur Ermittlung der Netzimpedanz $y_{NH}$ wird beispielsweise die aktuelle Netzspannungsänderung $\Delta u_{NH}$ bezüglich des H-ten Oberschwingungsanteils und eine aktuelle Netzstromänderung $\Delta i_{NH}$ bezüglich des H-ten Oberschwingungsanteils bestimmt und daraus dann die Netzimpedanz $y_{NH}$ durch Berechnung ermittelt. Es sei erwähnt, dass auch andere Möglichkeiten der Ermittlung der Netzimpedanz $y_{NH}$, wie z.B. Messung, denkbar wären.

Vorzugsweise wird der H-ten Oberschwingungsanteil der Netzspannungen $u_{NH}$ aus der Park-Clarke Transformation der Netzspannungen $u_{Nd}$, $u_{Nq}$. $u_{Nd}$ und $u_{Nq}$ sind die entsprechenden Komponenten der Park-Clarke Transformation der Netzspannungen.

Es sei erwähnt, dass die Park-Clarke-Transformation allgemein definiert ist zu

$$\overline{x} = \left(x_d + jx_q\right)e^{j\omega t},$$

wobei $\overline{x}$ allgemein eine komplexe Grösse, $x_d$ die d-Komponente der Park-Clarke-Transformation der Grösse $\overline{x}$ und $x_q$ die q-Komponente der Park-Clarke-Transformation der Grösse $\overline{x}$ ist. Vorteilhaft werden bei der Park-Clarke-Transformation nicht nur die Grundschwingung

der komplexen Grösse $\overline{x}$ transformiert, sondern auch sämtlich vorkommende Oberschwingungsanteile der komplexen Grösse $\overline{x}$. Der H-te Oberschwingungsanteil ist somit also auch enthalten und kann durch einfache Ausfilterung extrahiert werden.

Bezüglich des erfindungsgemässen Verfahrens wird die Park-Clarke Transformation der Netzspannungen $u_{Nd}$, $u_{Nq}$ mit Vorteil aus der Raumzeigertransformation der Netzspannungen $u_{N\alpha}$, $u_{N\beta}$ gebildet, d.h. die Netzspannungen $u_{Na}$, $u_{Nb}$, $u_{Nc}$ werden durch die Raumzeigertransformation transformiert.

Es sei erwähnt, dass die Raumzeigertransformation wie folgt definiert ist

$$\overline{x} = x_\alpha + jx_\beta,$$

wobei $\overline{x}$ allgemein eine komplexe Grösse, $x_\alpha$ die $\alpha$-Komponente der Raumzeigertransformation der Grösse $\overline{x}$ und $x_\beta$ die $\beta$-Komponente der Raumzeigertransformation der Grösse $\overline{x}$ ist.

Vorzugsweise wird der H-te Oberschwingungsanteil der Netzströme $i_{NH}$ aus der Park-Clarke Transformation der Netzströme $i_{Nd}$, $i_{Nq}$ gebildet. $i_{Nd}$ und $i_{Nq}$ sind die entsprechenden Komponenten der Park-Clarke Transformation der Netzströme. Ferner wird die Park-Clarke Transformation der Netzströme $i_{Nd}$, $i_{Nq}$ aus der Raumzeigertransformation der Netzströme $i_{N\alpha}$, $i_{N\beta}$ gebildet, d.h. die Netzströme $i_{Na}$, $i_{Nb}$, $i_{Nc}$ werden durch die Raumzeigertransformation transformiert.

Die vorstehend bereits erwähnte Ausregelung des H-ten Oberschwingungsanteils der Netzspannungen $u_{NH}$ auf den vorgebbaren Netzspannungssollwert $u_{NHref}$ erfolgt vorzugsweise nach einer Proportional-Integral-Charakteristik, da diese sich durch Einfachheit auszeichnet. Alternativ ist es aber auch denkbar, dass die Ausregelung des H-ten Oberschwingungsanteils der Netzspannungen $u_{NH}$ auf den vorgebbaren Netzspannungssollwert $u_{NHref}$ nach einer Dead-Beat-Charakteristik mittels Iteration erfolgt. Bei der Ausregelung nach der Dead-Beat-Charakteristik mittels Iteration wird vorzugsweise folgende Formel zur Bildung verwendet

$$i_{NHref} = i_{NHref,old} + (u_{NH} - u_{NHref}) \cdot y_{NH} \cdot k$$

wobei bei jedem Iterationsschritt der Netzstromsollwert $i_{NHref}$ neu gebildet wird und $i_{NHref,old}$ der Netzstromsollwert des vorangehenden Iterationsschrittes ist und k ein Korrekturfaktor ist, der vorteilhaft in der Grössenordnung 0,1 bis 1 gewählt wird. Es sei erwähnt, dass aber auch jedwede andere Regelcharakteristik denkbar wäre.

Wie bereits erwähnt ist in Fig. 1 eine Ausführungsform einer erfindungsgemässen Vorrichtung zur Durchführung des erfindungsgemässen Verfahrens zum Betrieb einer Umrichterschaltung gezeigt. Gemäss Fig.

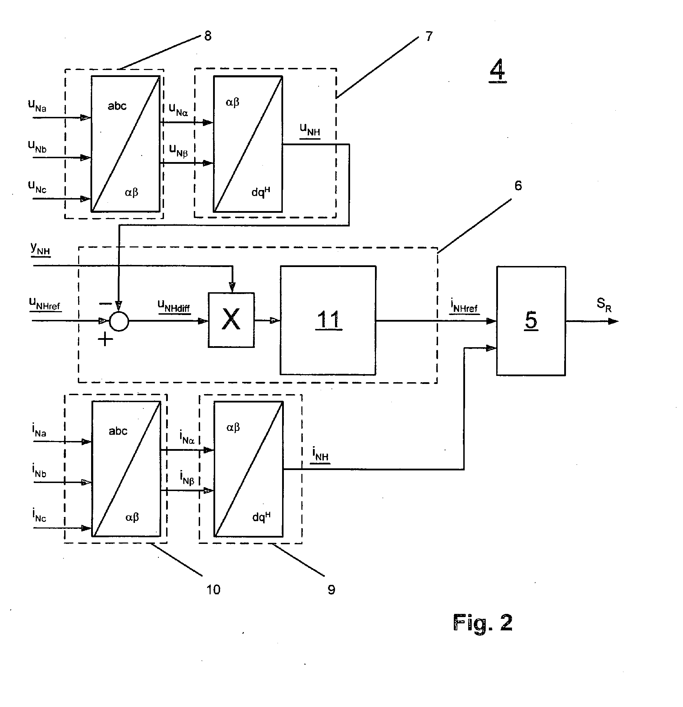

1 ist die der Erzeugung des Regelsignals $S_R$ dienende Regelungsvorrichtung 4 über eine Ansteuerschaltung 3 zur Bildung des Ansteuersignals $S_A$ mit den ansteuerbaren Leistungshalbleiterschaltern der Umrichtereinheit 2 verbunden. In Fig. 2 ist eine Ausführungsform einer erfindungsgemässen Regelungsvorrichtung 4 dargestellt, wobei die Regelungsvorrichtung 4 eine erste Reglereinheit 5 zur Bildung des Regelsignals $S_R$ durch Ausregelung des H-ten Oberschwingungsanteils der Netzströmen $i_{NH}$ auf den Netzstromsollwert $i_{NHref}$ aufweist und H=1, $\overline{2}$, $\overline{3}$, ..., ist. Efindungsgemäss weist die Regelungsvorrichtung 4 eine zweite Reglereinheit 6 zur Bildung des Netzstromsollwertes $i_{NHref}$ durch Ausregelung des H-ten Oberschwingungsanteils der Netzspannungen $u_{NH}$ auf den vorgebbaren Netzspannungssollwert $u_{NHref}$ auf, wobei die Regeldifferenz $u_{NHdiff}$ aus dem H-ten Oberschwingungsanteil von Netzspannungen $u_{NH}$ und dem Netzspannungssollwert $u_{NHref}$ durch die bezüglich des H-ten Oberschwingungsanteils ermittelte Netzimpedanz $y_{NH}$ gewichtet ist.

Die zweite Reglereinheit 6 zur Ausregelung des H-ten Oberschwingungsanteils der Netzspannungen $u_{NH}$ auf den vorgebbaren Netzspannungssollwert $u_{NHref}$ umfasst gemäss Fig. 2 einen Regler 11, welcher Regler 11 beispielsweise als Proportional-Integral-Regler mit entsprechender und bereits erwähnter Charakteristik oder als Dead-Beat-Regler mit entsprechender und bereits erwähnter Charakteristik ausgebildet sein kann. Es sei erwähnt, dass aber auch jeder andere Regler mit seiner entsprechenden Regelcharakteristik denkbar wäre.

Gemäss Fig. 2 weist die Regelungsvorrichtung 4 zudem eine erste Berechnungseinheit 7 zur Bildung der Park-Clarke Transformation der Netzspannungen $u_{Nd}$, $u_{Nq}$ aus der Raumzeigertransformation der Netzspannungen $u_{N\alpha}$, $u_{N\beta}$ und zur Bildung des H-ten Oberschwingungsanteils der Netzspannungen $u_{NH}$ aus der Park-Clarke Transformation der Netzspannungen $u_{Nd}$, $u_{Nq}$ auf.

Ferner weist die Regelungsvorrichtung 4 gemäss Fig. 2 eine zweite Berechnungseinheit 8 zur Bildung der Raumzeigertransformation der Netzspannungen $u_{N\alpha}$, $u_{N\beta}$ auf. Ferner umfasst die Regelungsvorrichtung 4 eine dritte Berechnungseinheit 9 zur Bildung der Park-Clarke Transformation der Netzströme $i_{Nd}$, $i_{Nq}$ aus der Raumzeigertransformation der Netzströme $i_{N\alpha}$, $i_{N\beta}$ und zur Bildung des H-ten Oberschwingungsanteils der Netzströmen $i_{NH}$ aus der Park-Clarke Transformation der Netzströme $i_{Nd}$, $i_{Nq}$. Die Regelungsvorrichtung 4 weist weiterhin eine vierte Berechnungseinheit 10 zur Bildung der Raumzeigertransformation der Netzströme $i_{N\alpha}$, $i_{N\beta}$ auf.

Das vorstehend detailliert beschriebene Verfahren sowie die zugehörige Vorrichtung zur Durchführung des Verfahrens bewirkt die Reduzierung eines H-ten Oberschwingungsanteils der Netzspannungen $u_{NH}$. Es versteht sich, dass zur Reduzierung beispielsweise mehrerer Oberschwingungsanteile der Netzspannungen für jeden dieser Oberschwingungsanteile das vorstehend erläuterte Verfahren mit den entsprechenden Verfahrensschritten separat durchgeführt wird. Bezüglich der Vorrichtung zur Durchführung des Verfahrens ist zur Reduzierung der Oberschwingungsanteile demnach für jeden dieser Oberschwingungsanteile eine zugehörige vorstehend beschriebene Vorrichtung notwendig.

Sämtliche Schritte des erfindungsgemässen Verfahrens können als Software realisiert werden, wobei diese dann beispielsweise auf ein Computersystem, insbesondere mit einem digitalen Signalprozessor, geladen werden und darauf ablaufen können. Ferner kann die vorstehend detailliert beschriebene erfindungsgemässe Vorrichtung auch in einem Computersystem, insbesondere in einem digitalen Signalprozessor, realisiert sein.

Insgesamt konnte gezeigt werden, dass die, insbesondere in Fig. 1 und Fig. 2 gezeigte, erfindungsgemässe Vorrichtung zur Durchführung des erfindungsgemässen Verfahrens zum Betrieb der Umrichterschaltung sehr einfach und kostengünstig realisiert werden kann, da der Schaltungsaufwand äusserst gering ist und zudem nur eine geringe Anzahl an Bauelementen für den Aufbau benötigt wird. Somit ist mit dieser Vorrichtung ist das erfindungsgemässe Verfahren besonders einfach durchführbar.

**Bezugszeichenliste**

1    elektrisches Wechselspannungsnetz

2    Umrichtereinheit

3    Ansteuerschaltung

4    Regelungsvorrichtung

5    erste Reglereinheit

6    zweite Reglereinheit

7    erste Berechnungseinheit

8    zweite Berechnungseinheit

9    dritte Berechnungseinheit

10    vierte Berechnungseinheit

11    Regler

**Patentansprüche**

**1.** Verfahren zum Betrieb einer Umrichterschaltung, wobei die Umrichterschaltung eine Umrichtereinheit (2) mit einer Vielzahl an ansteuerbaren Leistungshalbleiterschaltern aufweist und mit einem dreiphasigen elektrischen Wechselspannungsnetz (1) verbunden ist,

bei dem die ansteuerbaren Leistungshalbleiterschalter mittels eines aus einem Regelsignal ($S_R$) gebildeten Ansteuersignals ($S_A$) angesteuert werden und das Regelsignal ($S_R$) durch Ausregelung eines H-ten Oberschwingungsanteils von Netzströmen ($i_{NH}$) auf einen Netzstromsollwert ($i_{NH-ref}$) gebildet wird, wobei H=1, 2, 3, ..., ist,

**dadurch gekennzeichnet,**

**dass** der Netzstromsollwert ($i_{NHref}$) durch Ausregelung eines H-ten Oberschwingungsanteils von Netzspannungen ($u_{NH}$) auf einen vorgebbaren Netzspannungssollwert ($u_{NHref}$) gebildet wird, wobei die Regeldifferenz ($u_{NHdiff}$) aus dem H-ten Oberschwingungsanteil der Netzspannungen ($u_{NH}$) und dem Netzspannungssollwert ($u_{NHref}$) durch eine bezüglich des H-ten Oberschwingungsanteils ermittelte Netzimpedanz ($y_{NH}$) gewichtet wird.

**2.** Verfahren nach Anspruch 1, **dadurch gekennzeichnet, dass** bezüglich des H-ten Oberschwingungsanteils der Betrag der Netzspannungsänderung ($|\Delta u_{NH}|$) auf einen Schwellwert hin ($u_{NHTol}$) überwacht wird, und dass
bei jedem Überschreiten des Schwellwertes ($u_{NHTol}$) die Netzimpedanz ($y_{NH}$) ermittelt wird.

**3.** Verfahren nach Anspruch 2, **dadurch gekennzeichnet, dass** die Netzimpedanz ($y_{NH}$) aus der Netzspannungsänderung ($\Delta u_{NH}$) bezüglich des H-ten Oberschwingungsanteils und aus einer Netzstromänderung ($\Delta i_{NH}$) ermittelt wird.

**4.** Verfahren nach einem der Ansprüche 1 bis 3, **dadurch gekennzeichnet, dass** der H-ten Oberschwingungsanteils der Netzspannungen ($u_{NH}$) aus der Park-Clarke Transformation der Netzspannungen ($u_{Nd}$, $u_{Nq}$) gebildet wird.

**5.** Verfahren nach Anspruch 4, **dadurch gekennzeichnet, dass** die Park-Clarke Transformation der Netzspannungen ($u_{Nd}$, $u_{Nq}$) aus der Raumzeigertransformation der Netzspannungen ($u_{N\alpha}$, $u_{N\beta}$) gebildet wird.

**6.** Verfahren nach einem der Ansprüche 1 bis 5, **dadurch gekennzeichnet, dass** der H-te Oberschwingungsanteil der Netzströme ($i_{NH}$) aus der Park-Clarke Transformation der Netzströme ($i_{Nd}$, $i_{Nq}$) gebildet wird.

**7.** Verfahren nach Anspruch 6, **dadurch gekennzeichnet, dass** die Park-Clarke Transformation der Netzströme ($i_{Nd}$, $i_{Nq}$) aus der Raumzeigertransformation der Netzströme ($i_{N\alpha}$, $i_{N\beta}$) gebildet wird.

**8.** Verfahren nach einem der Ansprüche 1 bis 7, **da-**

**durch gekennzeichnet, dass** die Ausregelung des H-ten Oberschwingungsanteils der Netzspannungen ($\underline{u}_{NH}$) auf den vorgebbaren Netzspannungssollwert ($\underline{u}_{NHref}$) nach einer Proportional-Integral-Charakteristik erfolgt.

9. Verfahren nach einem der Ansprüche 1 bis 7, **dadurch gekennzeichnet, dass** die Ausregelung des H-ten Oberschwingungsanteils der Netzspannungen ($\underline{u}_{NH}$) auf den vorgebbaren Netzspannungssollwert ($\underline{u}_{NHref}$) nach einer Dead-Beat-Charakteristik mittels Iteration erfolgt.

10. Vorrichtung zur Durchführung eines Verfahrens zum Betrieb einer Umrichterschaltung, wobei die Umrichterschaltung eine Umrichtereinheit (1) mit einer Vielzahl an ansteuerbaren Leistungshalbleiterschaltern aufweist und mit einem dreiphasigen elektrischen Wechselspannungsnetz verbunden ist, mit einer der Erzeugung eines Regelsignals ($S_R$) dienenden Regelungsvorrichtung (4), die über eine Ansteuerschaltung (3) zur Bildung eines Ansteuersignals ($S_A$) mit den ansteuerbaren Leistungshalbleiterschaltern verbunden ist, wobei die Regelungsvorrichtung (4) eine erste Reglereinheit (5) zur Bildung des Regelsignals ($S_R$) durch Ausregelung eines H-ten Oberschwingungsanteils von Netzströmen ($\underline{i}_{NH}$) auf einen Netzstromsollwert ($\underline{i}_{NHref}$) aufweist, wobei H=1, 2, 3, ..., ist,
**dadurch gekennzeichnet,**
**dass** die Regelungsvorrichtung (4) eine zweite Reglereinheit (6) zur Bildung des Netzstromsollwertes ($\underline{i}_{NHref}$) durch Ausregelung eines H-ten Oberschwingungsanteils von Netzspannungen ($\underline{u}_{NH}$) auf einen vorgebbaren Netzspannungssollwert ($\underline{u}_{NHref}$) aufweist, wobei die Regeldifferenz ($\underline{u}_{NHdiff}$) aus dem H-ten Oberschwingungsanteil der Netzspannungen ($\underline{u}_{NH}$) und dem Netzspannungssollwert ($\underline{u}_{NHref}$) durch eine bezüglich des H-ten Oberschwingungsanteils ermittelte Netzimpedanz ($\underline{y}_{NH}$) gewichtet ist.

11. Vorrichtung nach Anspruch 10, **dadurch gekennzeichnet, dass** die Regelungsvorrichtung (4) eine erste Berechnungseinheit (7) zur Bildung der Park-Clarke Transformation der Netzspannungen ($u_{Nd}$, $u_{Nq}$) aus der Raumzeigertransformation der Netzspannungen ($u_{N\alpha}$, $u_{N\beta}$) und zur Bildung des H-ten Oberschwingungsanteils der Netzspannungen ($\underline{u}_{NH}$) aus der Park-Clarke Transformation der Netzspannungen ($u_{Nd}$, $u_{Nq}$) aufweist

12. Vorrichtung nach Anspruch 11, **dadurch gekennzeichnet, dass** die Regelungsvorrichtung (4) eine zweite Berechnungseinheit (8) zur Bildung der Raumzeigertransformation der Netzspannungen ($u_{N\alpha}$, $u_{N\beta}$) aufweist.

13. Vorrichtung nach einem der Ansprüche 10 bis 12, **dadurch gekennzeichnet, dass** die Regelungsvorrichtung (4) eine dritte Berechnungseinheit (9) zur Bildung der Park-Clarke Transformation der Netzströme ($i_{Nd}$, $i_{Nq}$) aus der Raumzeigertransformation der Netzströme ($i_{N\alpha}$, $i_{N\beta}$) und zur Bildung des H-ten Oberschwingungsanteils der Netzströmen ($\underline{i}_{NH}$) aus der Park-Clarke Transformation der Netzströme ($i_{Nd}$, $i_{Nq}$) aufweist.

14. Vorrichtung nach Anspruch 13, **dadurch gekennzeichnet, dass** die Regelungsvorrichtung (4) eine vierte Berechnungseinheit (10) zur Bildung der Raumzeigertransformation der Netzströme ($i_{N\alpha}$, $i_{N\beta}$) aufweist.

15. Vorrichtung nach einem der Ansprüche 10 bis 14, **dadurch gekennzeichnet, dass** die zweite Reglereinheit (6) zur Ausregelung des H-ten Oberschwingungsanteils der Netzspannungen ($\underline{u}_{NH}$) auf den vorgebbaren Netzspannungssollwertes ($\underline{u}_{NHref}$) einen Regler (11) umfasst.


**Claims**

1. Method for operating a converter circuit, the converter circuit having a converter unit (2) with a large number of drivable power semiconductor switches and with a three-phase electrical AC voltage system (1), in which the drivable power semiconductor switches are driven by means of a drive signal ($S_A$) formed from a control signal (($S_R$), and the control signal ($S_R$) is formed by adjusting an H-th harmonic component of system currents ($\underline{i}_{NH}$) to a system current setpoint value ($\underline{i}_{NHref}$) where H=1, 2, 3, ...,
**characterized**
**in that** the system current setpoint value ($\underline{i}_{NHref}$) is formed by adjusting an H-th harmonic component of system voltages ($\underline{u}_{NH}$) to a predeterminable system voltage setpoint value ($\underline{u}_{NHref}$), the control difference ($\underline{u}_{NHdiff}$) from the H-th harmonic component of the system voltages ($\underline{u}_{NH}$) and the system voltage setpoint value ($\underline{u}_{NHref}$) being weighted by a system impedance ($\underline{y}_{NH}$) determined with respect to the H-th harmonic component.

2. Method according to Claim 1, **characterized in that,** with respect to the H-th harmonic component, the absolute value of the system voltage change ($|\underline{\Delta u}_{NH}|$) towards a threshold value ($u_{NHTol}$) is monitored, and **in that** each time the threshold value ($u_{NHTol}$) is exceeded, the system impedance ($\underline{y}_{NH}$) is determined.

3. Method according to Claim 2, **characterized in that** the system impedance ($\underline{y}_{NH}$) is determined from the system voltage change ($\underline{\Delta u}_{NH}$) with respect to the H-th harmonic component and from a system current

change ($\underline{\Delta i}_{NH}$).

4. Method according to one of Claims 1 to 3, **characterized in that** the H-th harmonic component of the system voltages ($\underline{u}_{NH}$) is formed from the Park-Clarke transformation of the system voltages ($u_{Nd}$, $u_{Nq}$).

5. Method according to Claim 4, **characterized in that** the Park-Clarke transformation of the system voltages ($u_{Nd}$, $u_{Nq}$) is formed from the space vector transformation of the system voltages ($u_{N\alpha}$, $u_{N\beta}$).

6. Method according to one of Claims 1 to 5, **characterized in that** the H-th harmonic component of the system currents ($\underline{i}_{NH}$) is formed from the Park-Clarke transformation of the system currents ($i_{Nd}$, $i_{Nq}$).

7. Method according to Claim 6, **characterized in that** the Park-Clarke transformation of the system currents ($i_{Nd}$, $i_{Nq}$) is formed from the space vector transformation of the system currents ($i_{N\alpha}$, $i_{N\beta}$).

8. Method according to one of Claims 1 to 7, **characterized in that** the adjustment of the H-th harmonic component of the system voltages ($\underline{u}_{NH}$) to the predeterminable system voltage setpoint value ($\underline{u}_{NHref}$) takes place in accordance with a proportional/integral characteristic.

9. Method according to one of Claims 1 to 7, **characterized in that** the adjustment of the H-th harmonic component of the system voltages ($\underline{u}_{NH}$) to the predeterminable system voltage setpoint value ($\underline{u}_{NHref}$) takes place in accordance with a dead-beat characteristic by means of iteration.

10. Apparatus for implementing a method for operating a converter circuit, the converter circuit having a converter unit (1) with a large number of drivable power semiconductor switches and being connected to a three-phase electrical AC voltage system, with a control apparatus (4), which is used to generate a control signal ($S_R$) and is connected to the drivable power semiconductor switches via a drive circuit (3) for forming a drive signal ($S_A$), the control apparatus (4) having a first controller unit (5) for forming the control signal ($S_R$) by adjusting an H-th harmonic component of system currents ($\underline{i}_{NH}$) to a system current setpoint value ($\underline{i}_{NHref}$), where H=1, 2, 3, ..., **characterized in that** the control apparatus (4) has a second controller unit (6) for forming the system current setpoint value ($\underline{i}_{NHref}$) by adjusting an H-th harmonic component of system voltages ($\underline{u}_{NH}$) to a predeterminable system voltage setpoint value ($\underline{u}_{NHref}$), the control difference ($\underline{u}_{NHdiff}$) from the H-th harmonic component of the system voltages ($\underline{u}_{NH}$) and the system

voltage setpoint value ($\underline{u}_{NHref}$) being weighted by a system impedance ($\underline{y}_{NH}$) determined with respect to the H-th harmonic component.

11. Apparatus according to Claim 10, **characterized in that** the control apparatus (4) has a first computation unit (7) for forming the Park-Clarke transformation of the system voltages ($u_{Nd}$, $u_{Nq}$) from the space vector transformation of the system voltages ($u_{N\alpha}$, $u_{N\beta}$) and forming the H-th harmonic component of the system voltages ($\underline{u}_{NH}$) from the Park-Clarke transformation of the system voltages ($u_{Nd}$, $u_{Nq}$).

12. Apparatus according to Claim 11, **characterized in that** the control apparatus (4) has a second computation unit (8) for forming the space vector transformation of the system voltages ($u_{N\alpha}$, $u_{N\beta}$).

13. Apparatus according to one of Claims 10 to 12, **characterized in that** the control apparatus (4) has a third computation unit (9) for forming the Park-Clarke transformation of the system currents ($i_{Nd}$, $i_{Nq}$) from the space vector transformation of the system currents ($i_{N\alpha}$, $i_{N\beta}$) and forming the H-th harmonic component of the system currents ($\underline{i}_{NH}$) from the Park-Clarke transformation of the system currents ($i_{Nd}$, $i_{Nq}$).

14. Apparatus according to Claim 13, **characterized in that** the control apparatus (4) has a fourth computation unit (10) for forming the space vector transformation of the system currents ($i_{N\alpha}$, $i_{N\beta}$).

15. Apparatus according to one of Claims 10 to 14, **characterized in that** the second controller unit (6) for adjusting the H-th harmonic component of the system voltages ($\underline{u}_{NH}$) to the predeterminable system voltage setpoint value ($\underline{u}_{NHref}$) comprises a controller (11).

**Revendications**

1. Procédé de gestion du fonctionnement d'un circuit convertisseur, le circuit convertisseur présentant une unité de convertisseur (2) qui présente plusieurs commutateurs de puissance semi-conducteurs asservis et étant relié à un réseau électrique à tension alternative triphasée (1), les commutateurs de puissance semi-conducteurs asservis étant commandés au moyen d'un signal de commande ($S_A$) formé d'un signal de régulation ($S_R$) et le signal de régulation ($S_R$) étant formé en régulant la partie des courants de réseau ($\underline{i}_{NH}$) constituée des harmoniques d'ordre H à une valeur de consigne de courant de réseau ($\underline{i}_{NH-ref}$), avec H = 1, 2, 3, ..., **caractérisé en ce que** la valeur de consigne du courant de réseau ($\underline{i}_{NHref}$)

est formée en régulant la partie des tensions du réseau ($\underline{U}_{NH}$) constituée des harmoniques d'ordre H à une valeur de consigne prédéterminée de la tension du réseau ($\underline{U}_{NHref}$) l'écart de réglage ($\underline{U}_{NHdiff}$) entre la partie des tensions du réseau ($\underline{U}_{NH}$) constituée des harmoniques d'ordre H et la valeur de consigne de tension du réseau ($\underline{U}_{NHref}$) étant pondéré par l'impédance de réseau ($\underline{V}_{NH}$) déterminée pour la partie constituée des harmoniques d'ordre H.

2. Procédé selon la revendication 1, **caractérisé en ce que** pour la partie constituée des harmoniques d'ordre H, le niveau de modification de la tension du réseau ($|\Delta\underline{U}_{NH}|$) est surveillé en référence à une valeur de seuil ($U_{NHTol}$) et **en ce que** l'impédance du réseau ($\underline{V}_{NH}$) est déterminée lors de chaque dépassement de la valeur de seuil ($U_{NHTol}$).

3. Procédé selon la revendication 2, **caractérisé en ce que** l'impédance du réseau ($\underline{V}_{NH}$) est déterminée à partir de la modification de la tension de réseau ($\Delta\underline{U}_{NH}$) sur la partie constituée des harmoniques d'ordre H et d'une modification du courant du réseau ($\Delta\underline{i}_{NH}$).

4. Procédé selon l'une des revendications 1 à 3, **caractérisé en ce que** la partie des tensions du réseau ($\underline{U}_{NH}$) constituée des harmoniques d'ordre H est formée par transformation de Park-Clarke des tensions du réseau ($U_{Nd}$, $U_{Nq}$).

5. Procédé selon la revendication 4, **caractérisé en ce que** la transformation de Park-Clarke des tensions du réseau ($U_{Nd}$, $U_{Nq}$) est formée par transformation vectorielle des tensions du réseau ($U_{N\alpha}$, $U_{N\beta}$).

6. Procédé selon l'une des revendications 1 à 5, **caractérisé en ce que** la partie des courants du réseau ($\underline{i}_{NH}$) constituée des harmoniques d'ordre H est formée par transformation de Park-Clarke des courants du réseau ($i_{Nd}$, $i_{Nq}$).

7. Procédé selon la revendication 6, **caractérisé en ce que** la transformation de Park-Clarke des courants du réseau ($i_{Nd}$, $i_{Nq}$) est réalisée par transformation vectorielle des courants du réseau ($i_{N\alpha}$, $i_{N\beta}$).

8. Procédé selon l'une des revendications 1 à 7, **caractérisé en ce que** la partie des tensions du réseau ($\underline{U}_{NH}$) constituée des harmoniques d'ordre H est régulée à la valeur prédéterminée de consigne de tension du réseau ($\underline{U}_{NHref}$) selon une caractéristique proportionnelle-intégrale.

9. Procédé selon l'une des revendications 1 à 7, **caractérisé en ce que** la partie des tensions du réseau ($\underline{U}_{NH}$) constituée des harmoniques d'ordre H est régulée à la valeur de consigne prédéterminée de tension du réseau ($\underline{U}_{NHref}$) par itération selon une caractéristique d'amortissement apériodique.

10. Dispositif en vue de l'exécution d'un procédé de gestion du fonctionnement d'un circuit convertisseur,
le circuit convertisseur présentant une unité de convertisseur (1) dotée de plusieurs commutateurs de puissance semi-conducteurs asservis et étant relié à un réseau électrique à tension alternative triphasée,
le dispositif présentant un dispositif de régulation (4) qui sert à former un signal de régulation ($S_R$) et qui est relié par un circuit de commande (3) aux commutateurs de puissance semi-conducteurs asservis pour former un signal de commande ($S_A$),
le dispositif de régulation (4) présentant une première unité de régulateur (5) qui forme le signal de régulation ($S_R$) en régulant une partie des courants du réseau ($\underline{i}_{NH}$) constituée des harmoniques d'ordre H à une valeur de consigne de courant du réseau ($\underline{i}_{NHref}$), avec H = 1, 2, 3, ...,
**caractérisé en ce que**
le dispositif de régulation (4) présente une deuxième unité de régulateur (6) qui forme la valeur de consigne du courant du réseau ($\underline{i}_{NHref}$) en régulant la partie des tensions du réseau ($\underline{U}_{NH}$) constituée des harmoniques d'ordre H à une valeur de consigne prédéterminée de tension du réseau ($\underline{U}_{NHref}$) l'écart de réglage ($\underline{U}_{NHdiff}$) formé entre la partie des tensions du réseau ($\underline{U}_{NH}$) constituée des harmoniques d'ordre H et la valeur de consigne de tension du réseau ($\underline{U}_{NHref}$) étant pondéré par l'impédance de réseau ($\underline{V}_{NH}$) déterminée pour la partie constituée des harmoniques d'ordre H.

11. Dispositif selon la revendication 10, **caractérisé en ce que** le dispositif de régulation (4) présente une première unité de calcul (7) qui réalise la transformation de Park-Clarke des tensions du réseau ($U_{Nd}$, $U_{Nq}$) à partir de la transformation vectorielle des tensions du réseau ($U_{N\alpha}$, $U_{N\beta}$) et qui forme la partie des tensions du réseau ($\underline{U}_{NH}$) constituée des harmoniques d'ordre H à partir de la transformation de Park-Clarke des tensions du réseau ($U_{Nd}$, $U_{Nq}$).

12. Dispositif selon la revendication 11, **caractérisé en ce que** le dispositif de régulation (4) présente une deuxième unité de calcul (8) qui réalise la transformation vectorielle des tensions du réseau ($U_{N\alpha}$, $U_{N\beta}$).

13. Dispositif selon l'une des revendications 10 à 12, **caractérisé en ce que** le dispositif de régulation (4) présente une troisième unité de calcul (9) qui réalise la transformation de Park-Clarke des courants du réseau ($i_{Nd}$, $i_{Nq}$) à partir de la transformation vectorielle des courants du réseau ($i_{N\alpha}$, $i_{N\beta}$) et qui forme la partie des courants du réseau ($\underline{i_{NH}}$) constituée des harmoniques d'ordre H à partir de la transformation de Park-Clarke des courants du réseau ($i_{Nd}$, $i_{Nq}$).

14. Dispositif selon la revendication 13, **caractérisé en ce que** le dispositif de régulation (4) présente une quatrième unité de calcul (10) qui réalise la transformation vectorielle des courants du réseau ($i_{N\alpha}$, $i_{N\beta}$).

15. Dispositif selon l'une des revendications 10 à 14, **caractérisé en ce que** la deuxième unité de régulateur (6) comprend un régulateur (11) qui régule la partie des tensions du réseau ($\underline{U_{NH}}$) constituée des harmoniques d'ordre H à la valeur de consigne prédéterminée de la tension du réseau ($\underline{U_{NHref}}$).

Fig. 1

Fig. 2

Fig. 3